# FASCICULE DE BREVET EUROPEEN

(11) **EP 3 228 185 B1**
(45) Date de publication et mention de la délivrance du brevet: **06.03.2019**
(21) Numéro de dépôt: 17164723.3
(22) Date de dépôt: 04.04.2017
(51) Int. Cl.: A01G 9/02

(54) **SYSTÈME DE VÉGÉTALISATION D'UNE PAROI D'UN MUR**
BEGRÜNUNGSSYSTEM EINER WAND EINER MAUER
SYSTEM FOR GREENING A WALL

(30) Priorité: 04.04.2016 FR 1600569
(43) Date de publication de la demande: 11.10.2017
(73) Titulaire: DIRIM, 78000 Versailles (FR)
(72) Inventeur: LE ROUX, Dominique, 78000 Versailles (FR)
(74) Mandataire: Célanie, Christian

(56) Documents cités:
- EP-A1- 1 771 062
- EP-A1- 2 692 225
- FR-A1- 2 902 283

## Description

Le secteur technique de la présente invention est celui des bâtiments, des constructions d'ouvrages et du génie civil, plus particulièrement le revêtement extérieur et la décoration de telles constructions.

On connaît certains procédés qui se proposent de végétaliser des murs en déployant sur ceux-ci un feutre épais garnis ou non de poches, lesquelles sont remplies de substrats nourrissants et plantés. Ces systèmes requièrent une irrigation et une fertilisation permanente. De plus, ce type de structure présente de nombreux inconvénients en cas de remplacement, de traitement ou de modification locale de leur arrangement car leur structure n'est pas réellement modulable.

On connaît également plusieurs structures de murs végétalisés composés de casiers à poser directement au sol et pouvant être juxtaposés et/ou superposés. Ainsi, le brevet EP-1771062 décrit des casiers adjacents assemblés entre eux au moyen de vis, qui relient de façon démontable leurs châssis respectifs.

Cependant, une telle structure nécessite, pour son installation, des opérations de soudage et de vissage et mobilise donc de la main d'oeuvre spécialisée. De plus, l'accès aux casiers est possible mais le remplacement d'un module demeure assez compliqué dans la mesure où les casiers sont vissés entre eux.

Une autre structure de mur végétalisé, décrit dans le brevet EP-1980145A2, se présente sous la forme d'une structure porteuse fixé sur la façade et de bacs modulaires contenant un substrat de culture et montés sur ladite structure porteuse et fixés à l'aide de goujons ou doigts.

Dans le cas d'une telle structure, il est possible de détacher les bacs modulaires mais il faudra pour cela se placer en face desdits bacs. Dans le cas d'une façade verticale d'une hauteur conséquente, il y aura donc besoin d'une nacelle et de main d'oeuvre qualifiée. Ces opérations de remplacement représentent une contrainte technique non négligeable. De plus, il sera possible de remplacer un ou plusieurs modules mais il sera impossible d'ajuster leurs positions une fois en place sur le mur.

Les différentes solutions connues présentent toutes des inconvénients limitant leur application, notamment en ce qui concerne la mise en place, le remplacement d'un ou plusieurs modules, et la qualification de la main d'oeuvre nécessaire.

L'invention a pour objet un système de végétalisation d'un mur, de façades ou analogues en fournissant un système qui permet la mise en place et le remplacement aisé de modules constituant le mur végétalisé.

L'invention a donc pour objet un système de végétalisation d'une paroi ou d'un mur, caractérisé par des réceptacles solidaires d'un chariot apte à se déplacer par rapport à deux rails espacés l'un de l'autre fixés sur le mur, chaque chariot se présente sous la forme d'une corbeille, coopérant avec les rails par l'intermédiaire de corps d'attache fixés au moins aux quatre angles de chaque chariot, les rails se présentant sous la forme d'un I, lesdits corps d'attache comportant un organe de roulement contre la barre du I, chaque corps d'attache étant soumis à l'action d'un moyen de motorisation pour son déplacement et à l'action d'un moyen de blocage contre la première branche du I.

Selon une caractéristique de l'invention, chaque moyen de motorisation et chaque moyen de blocage sont engagés dans un patin solidaire de la barre et de la seconde branche du I.

Selon une autre caractéristique de l'invention, le moyen de blocage se présente sous la forme d'un organe déformable sous l'action d'une vis de blocage montée rotative par rapport au patin.

Avantageusement, l'organe déformable comprend une partie rigide fixe solidaire de la seconde branche du rail et une partie semi-rigide entraînée par la vis de blocage pour d'une part, venir en appui sur un corps d'attache afin de l'appliquer contre la première branche du I et d'autre part, de l'éloigner de ce corps d'attache afin de libérer ledit corps.

Selon encore une autre caractéristique de l'invention, le moyen de motorisation du chariot comprend une vis de translation engrenant sur un filetage du corps d'attache et une vis motrice entraînant la vis de translation.

Selon encore une autre caractéristique de l'invention, les rails sont disposés de manière parallèle entre eux formant glissière de guidage des corps d'attache.

Avantageusement, les rails sont disposés de manière horizontale ou verticale.

Selon une autre caractéristique de l'invention, la corbeille se présente sous la forme d'un panier dont les mailles sont aptes à recevoir les réceptacles.

Avantageusement, les réceptacles assurent chacun la réception d'un substrat de plantation nécessaire à la croissance de plantes décoratives.

Selon encore une autre caractéristique de l'invention, le système de végétalisation comporte une pluralité de chariots empilés de manière horizontale ou verticale pour former un habillage complet du mur.

Un tout premier avantage de la présente invention réside dans la facilité de mise en place du système. En effet, il n'y a pas besoin de fixer les chariots aux rails à l'aide de vis ou de soudure, ces opérations ne nécessitent donc pas de main d'oeuvre qualifiée.

Un autre avantage de la présente invention réside dans la dimension modulaire du système. Les chariots peuvent être déplacés, leur position peut être ajustée, ils peuvent être remplacés par de nouveaux modules et tout cela sans intervention directe sur la façade. Il est en effet possible d'accéder à l'ensemble des chariots d'une rangée horizontale ou verticale, selon la disposition des rails, depuis une même position en bout de rangée. Cela facilite fortement la mise en place, l'entretien et le remplacement de module.

D'autres caractéristiques, avantages et détails de l'invention seront mieux compris à la lecture du complément de description qui va suivre de modes de réalisation donnés à titre d'exemple en relation avec des dessins sur lesquels :
- la figure 1 représente deux chariots empilés de façon verticale et en place dans les rails,
- les figures 2a et 2b représentent une vue détaillée en coupe du corps d'attache et son interaction avec le rail,
- la figure 3 représente le corps d'attache du chariot en place contre le rail en position bloquée,
- les figures 4a et 4b représentent les deux positions du moyen de blocage,
- la figure 5 représente une vue en perspective du rail équipé des différentes vis, et
- les figures 6a et 6b représentent l'organe déformable.

Comme indiqué précédemment, il s'agit de végétaliser un mur en prévoyant l'insertion d'un certain nombre de réceptacles dans lesquels des plantes vont être disposées.

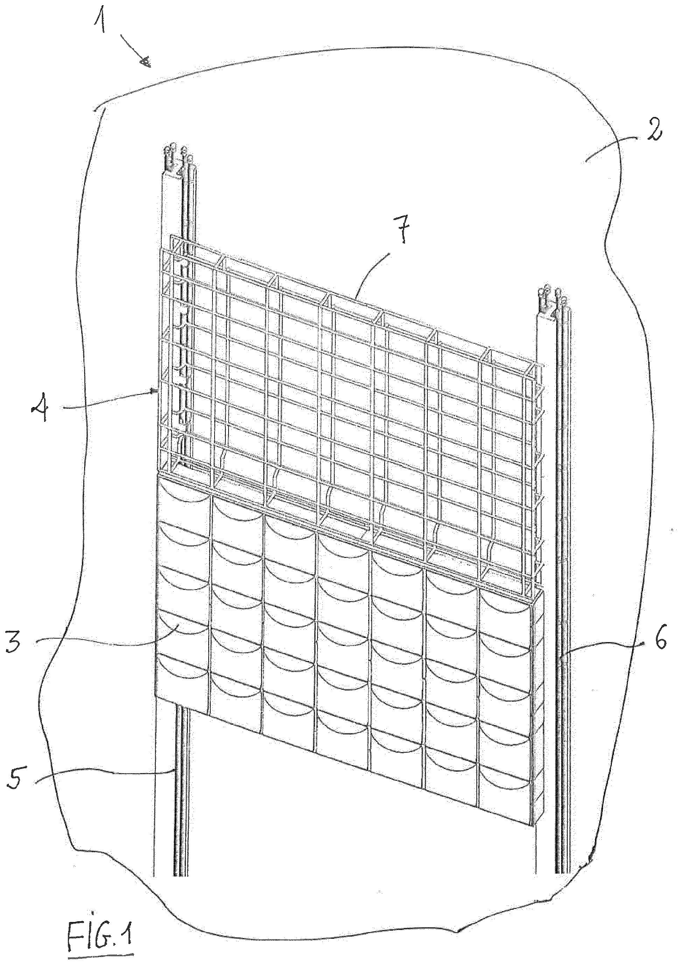

La figure 1 représente le système de végétalisation selon l'invention comprenant des rails 5 et 6 orientés de manière verticale, espacés l'un de l'autre et fixés sur un mur 2 ainsi que des réceptacles 3 solidaires d'un chariot 4 interposé entre lesdits rails 5 et 6.

Les chariots 4 se présentent sous la forme de corbeilles 7 de manière à pouvoir accueillir un substrat végétal dans les réceptacles 3 afin de permettre le développement des plantes. Les chariots 4 sont aptes à se déplacer par rapport aux rails 5 et 6 et sont disposés en colonne de manière à s'empiler les uns au dessus des autres.

Dans un autre mode de réalisation, les rails 5 et 6 peuvent être orientés horizontalement, les chariots sont alors disposés en rangée de manière à s'empiler les uns à côté des autres. Cet autre mode de réalisation est techniquement identique au présent mode décrit ci-après, il n'est donc pas nécessaire de le représenter.

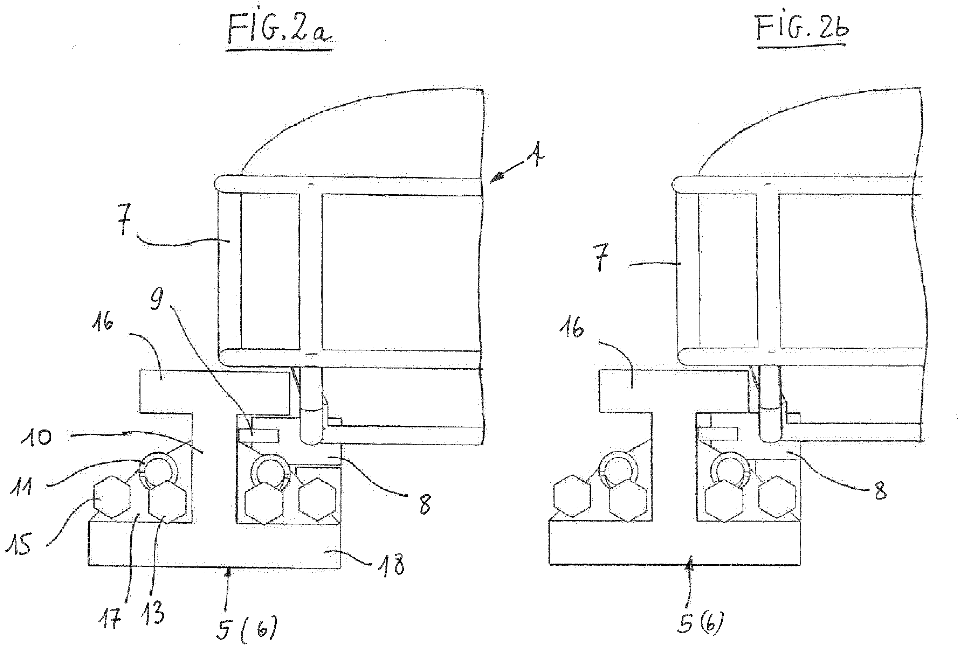

Comme représenté sur les figures 2a et 2b, les corbeilles 7 coopèrent avec les rails 5 et 6 par l'intermédiaire de corps d'attache 8 fixés au moins aux quatre angles de chaque corbeille. Ces corps d'attache 8 permettent le déplacement et le blocage de chaque chariot 4. Les rails 5 et 6 sont disposés de manière parallèle entre eux formant ainsi une glissière de guidage des corps d'attache 8. Chaque chariot peut être déplacé individuellement le long de cette glissière.

La corbeille 7 se présente sous la forme d'un panier dont les mailles sont aptes à recevoir les réceptacles 3. Ces réceptacles 3 assurent chacun la réception d'un substrat de plantation nécessaire à la croissance de plantes décoratives.

La figure 2a représente une vue détaillée en coupe du corps d'attache 8 et son interaction avec le rail 5, étant entendu que l'on retrouve la même structure au niveau du rail 6. Le rail 5 (ou 6) se présente sous la forme d'un I en délimitant une barre 10, une première branche 16 et une seconde branche 18.

Le corps d'attache 8 comporte un organe de roulement 9 en prise sur la barre 10 du I. Chaque corps d'attache est soumis à l'action d'un moyen de motorisation 11, 12 et 13 pour son déplacement et à l'action d'un moyen de blocage 14 et 15 contre la première branche 16 du I.

Chaque moyen de motorisation 11, 12 et 13 et chaque moyen de blocage 14 et 15 sont engagés dans un patin fileté 17 solidaire de la barre 10 et de la seconde branche 18 du I.

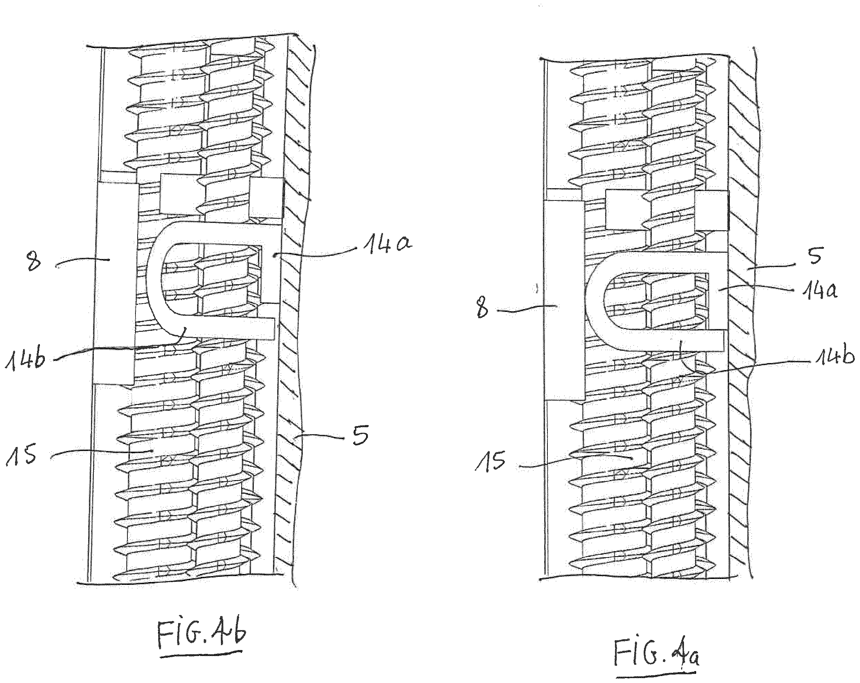

Le moyen de motorisation 11, 12 et 13 du chariot 4 comprend une vis de translation 11 engrenant sur un filetage 12 du corps d'attache 8 et une vis motrice 13 entraînant la vis de translation 11. La vis motrice 13 et la vis de translation 11 sont des vis sans fin montées rotatives par rapport au patin 17. Le filetage 12 du corps d'attache 8 est visible sur la figure 4.

Lorsqu'elle est mise en rotation, la vis motrice 13 entraîne la vis de translation 11 qui agit alors sur le filetage 12 du corps d'attache et permet d'appliquer un mouvement de translation au dit corps d'attache 8 entraînant ainsi le déplacement du chariot 47 le long des rails 5 et 6.

Sur la figure 2a, on voit que le corps d'attache 8 n'est pas en contact avec le rail 5.

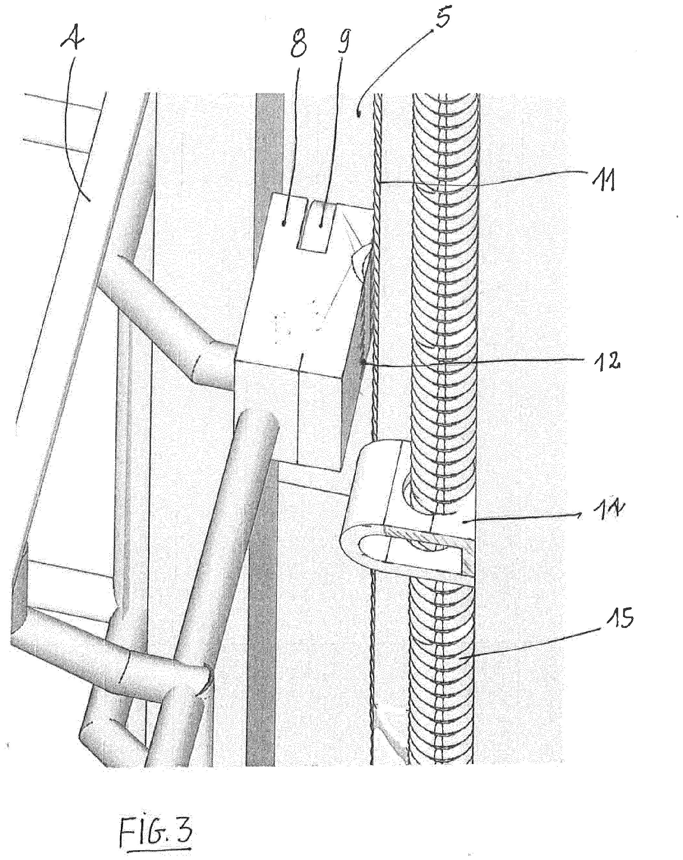

La figure 2b représente le corps d'attache 8 du chariot en butée contre le rail 5 en position bloquée et la figure 3 en position libre en coopération avec le moyen de blocage.

Le moyen de blocage 14 et 15 se présente sous la forme d'un organe déformable 14 sous l'action d'une vis de blocage 15 montée rotative par rapport au patin fileté 17 visible sur la figure 3. La figure 3 montre la position libre du corps déformable 14 après rotation de la vis 15.

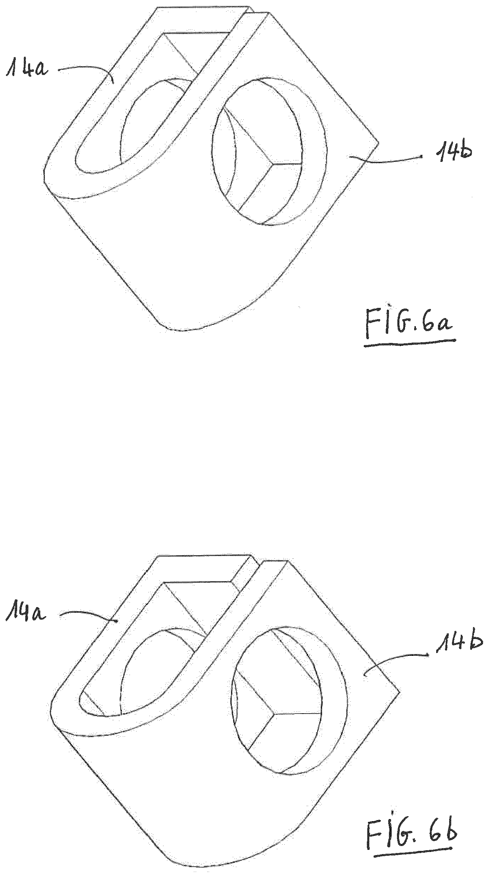

L'organe déformable 14 représenté sur les figures 6a et 6b est constitué d'une partie rigide fixe 14a solidaire de la seconde branche 18 du rail et une partie semi-rigide 14b. Dans la position de blocage représentée sur la figure 6a, on voit que les parties 14a et 14b sont jointives et sur la figure 6b ces deux parties sont écartées l'une de l'autre. Cette déformation provoque une réduction de dimension de l'organe 14.

Les figures 6 représentent l'organe déformable 14 en position libre et en position bloquée.

En position libre, la vis de blocage 15 entraîne la partie semi-rigide 14b tandis qu'elle tourne librement par rapport à la partie 14a. On voit que la courbure de la partie semi-rigide 14b diminue. En position bloquée, la vis de blocage 15 entraîne la partie semi-rigide dans le sens inverse. La courbure de la partie semi-rigide augmente et vient appliquer l'organe déformable 14 contre le corps 8. La longueur maximale de l'organe déformable 14, allant de la courbure à la face solidaire au rail 5, est plus grande en position bloquée qu'en position libre. C'est cette différence de longueur qui permet d'appliquer une pression sur le corps d'attache 8 et de bloquer la position du chariot 4.

On voit sur la figure 3 que la vis de blocage 15 traverse l'organe déformable 14, en étant montée rotative par rapport à la partie rigide fixe 14a mais entraîne la partie semi-rigide 14b à l'aide du filetage. De cette manière, lorsque la vis de blocage 15 est mise en rotation, elle tourne dans le vide au niveau de la partie rigide fixe 14a mais elle provoque la déformation de la partie semi-rigide 14b pour d'une part, venir en appui sur un corps d'attache 8 afin de l'appliquer contre la première branche 16 du I (position de blocage) et d'autre part, l'éloigner de ce corps d'attache 8 (position libre) afin de libérer ledit corps. Le blocage et la libération du corps d'attache 8 se fait donc par simple rotation de la vis de blocage 15.

Sur cette figure3, on voit également le filetage 12 pratiqué sur le corps d'attache 8 dans lequel la vis 11 agit pour provoquer la translation du chariot. C'est par l'intermédiaire de ce filetage 12 que le mouvement de rotation de la vis de translation 11 est transformé en mouvement de translation du corps d'attache 8 le long de la glissière formée par les rails 5 et 6.

On voit sur les figures 4a et 4b les deux positions de l'organe déformable 14. Sur la figure 4a, le corps d'attache 8 du chariot 4 est toujours contre le rail 5 et maintenu par l'organe déformable 14 à l'aide de la partie 14b. La figure 4b montre la position libre du corps 8, l'organe déformable 14 étant éloigné de celui-ci par l'action de la vis de blocage 15.

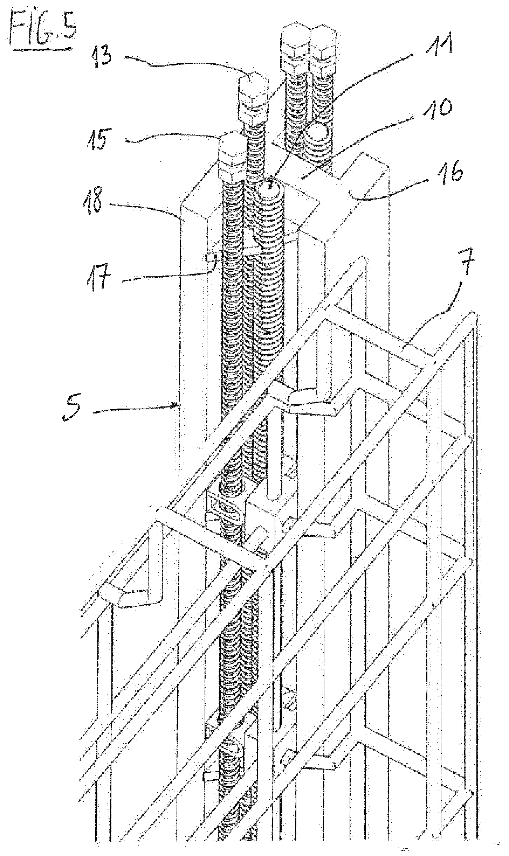

La figure 5 est une vue de l'extrémité du rail 5, des différentes vis 11, 13 et 15 et du patin fileté 17. La vis de translation 11, la vis motrice 13 et la vis de blocage 15 sont engagées dans le patin fileté 17 et sont montées rotatives par rapport audit patin. Un patin 17 est présent au moins aux deux extrémités de chaque rail 5 ou 6 de manière à maintenir les vis 11, 13 et 15 le long de ces rails. De cette manière, les vis 11, 13 et 15 sont maintenues solidaires des rails et peuvent tourner le long de leur axe sans entraîner un déplacement de chacun des patins 17.

Seules la vis motrice 13 et la vis de blocage 15 se terminent par une tête pour faciliter la rotation par un intervenant. C'est sur ces deux seules vis qu'un opérateur devra agir pour contrôler le moyen de motorisation 11, 12 et 13 et le moyen de blocage 14 et 15.

Le caractère modulaire du présent système constitue l'un de ses nombreux avantages. En effet, le chariot 4 se présente sous la forme d'un module. Ainsi, le système selon l'invention permet d'assembler ces modules par groupe pour former un habillage complet d'une paroi ou d'un mur, soit un mur de clôture, soit le mur d'un bâtiment tout en conservant leur intégrité.

Il peut s'avérer nécessaire de procéder au remplacement d'un chariot 4. L'opérateur tourne directement la vis de translation 11, jusqu'à ce que le premier chariot arrive au bout du rail 5. Pour éviter que le chariot puisse être retiré des rails, l'inventeur a donc incorporé de manière ingénieuse la seconde vis 13 afin d'agir sur la première vis 11. Ainsi, même lorsque le support arrive en bout de rail, l'opérateur peut continuer à agir sur la vis de translation 11 et sortir totalement le chariot hors des rails 5 et 6. Il est alors possible d'introduire un nouveau chariot pré-équipé de plantes en bon état.

Lors de la mise en place d'un chariot, l'opérateur va agir sur les vis motrices 13 pour mettre les chariots 4 en place. Ensuite, l'opérateur va agir sur les vis de blocage 15 pour verrouiller la position en place des chariots 4. Comme exposé précédemment, lorsque la vis de blocage 15 est mise en rotation, elle va ramener la partie semi-rigide 14b de l'organe déformable 14 qui va venir en appui contre le corps d'attache 8. Ledit corps d'attache 8 va alors venir au contact de la première branche 16 du I et supprimer tout jeu entre le corps d'attache 8 et le rail 5 et donc de bloquer le chariot 4 dans les rails. De cette manière, lorsqu'une façade de bâtiment est recouverte avec le système selon la présente invention, même en cas de vents violents, aucun bruit de chocs métalliques ne se fera entendre et le maintien des supports est supérieur et plus sécurisé qu'avec les systèmes de l'état de la technique.

Selon la présente invention, il est possible de déplacer toute une rangée de chariots 4 en agissant uniquement sur les deux vis motrices 15. Il est également possible de verrouiller et de déverrouiller la position de toute une rangée de chariots 4 en agissant uniquement sur les deux vis de serrage 16. Dans le cas d'une conformation verticale sur une façade, il sera possible de mettre en place ou de remplacer un ou plusieurs chariots 4 depuis le sol ou du moins d'une hauteur qui ne nécessite pas de dispositif d'intervention tel une nacelle ou un échafaudage. Cet avantage diminue considérablement le coût de main d'oeuvre d'une installation du présent système.

La facilité de mise en place et de remplacement d'un ou plusieurs modules, la rapidité de mise en oeuvre et l'absence de besoin de main d'oeuvre qualifiée sont autant d'avantages du présent système face aux systèmes concurrents de murs végétalisés.

## Revendications

1. Système de végétalisation (1) d'une paroi ou d'un mur (2), **caractérisé par** des réceptacles (3) solidaires d'un chariot (4) apte à se déplacer par rapport à deux rails (5, 6) espacés l'un de l'autre et fixés sur le mur (2), chaque chariot (4) se présente sous la forme d'une corbeille (7), coopérant avec les rails (5, 6) par l'intermédiaire de corps d'attache (8) fixés au moins aux quatre angles de chaque chariot (4), les rails (5, 6) se présentant sous la forme d'un I, lesdits corps d'attache (8) comportant un organe de roulement (9) contre la barre (10) du I, chaque corps d'attache (8) étant soumis à l'action d'un moyen de motorisation (11, 12, 13) pour son déplacement et à l'action d'un moyen de blocage (14, 15) contre la première branche du I.

2. Système de végétalisation (1) d'une paroi ou d'un mur (2) selon la revendication 1, **caractérisé en ce que** chaque moyen de motorisation (11, 12, 13) et chaque moyen de blocage (14, 15) sont engagés dans un patin (17) solidaire de la barre (10) et de la seconde branche (18) du I.

3. Système de végétalisation (1) d'une paroi ou d'un mur (2) selon la revendication 1 ou 2, **caractérisé en ce que** le moyen de blocage (14, 15) se présente sous la forme d'un organe déformable (14) sous l'action d'une vis de blocage (15) montée rotative par rapport au patin (17).

4. Système de végétalisation (1) d'une paroi ou d'un mur (2) selon la revendication 3, **caractérisé en ce que** l'organe déformable (14) comprend une partie rigide fixe (14a) solidaire de la seconde branche (18) du rail et une partie semi-rigide (14b) entraînée par la vis de blocage (15) pour d'une part venir en appui sur un corps d'attache (8) afin de l'appliquer contre la première branche (16) du I et d'autre part de l'éloigner de ce corps d'attache (8) afin de libérer ledit corps.

5. Système de végétalisation (1) d'une paroi ou d'un mur (2) selon l'une quelconque des revendications précédentes, **caractérisé en ce que** le moyen de motorisation (11, 12, 13) du chariot (7) comprend une vis de translation (11) engrenant sur un filetage (12) du corps d'attache (8) et une vis motrice (13) entraînant la vis de translation (11).

6. Système de végétalisation (1) d'une paroi ou d'un mur (2) selon l'une des revendications précédentes, **caractérisé en ce que** les rails (5, 6) sont disposés de manière parallèle entre eux formant glissière de guidage des corps d'attache (8) .

7. Système de végétalisation (1) d'une paroi ou d'un mur (2) selon la revendication 6, **caractérisé en ce que** les rails (5, 6) sont disposés de manière horizontale ou verticale.

8. Système de végétalisation (1) d'une paroi ou d'un mur (2) selon l'une quelconque des revendications précédentes, **caractérisé en ce que** la corbeille (7) se présente sous la forme d'un panier dont les mailles sont aptes à recevoir les réceptacles (3).

9. Système de végétalisation (1) d'une paroi ou d'un mur (2) selon la revendication 8, **caractérisé en ce que** les réceptacles (3) assurent chacun la réception d'un substrat de plantation nécessaire à la croissance de plantes décoratives.

10. Système de végétalisation (1) d'une paroi ou d'un mur (2) selon l'une quelconque des revendications précédentes, **caractérisé en ce qu'**il comporte une pluralité de chariots (4) empilés de manière horizontale ou verticale pour former un habillage complet du mur (2).

## Patentansprüche

1. System zur Begrünung (1) einer Wand oder einer Mauer (2) gekennzeichnet mit Hilfe von Behältern (3), welche fest mit einem Schlitten (4) verbunden sind, welcher geeignet ist, sich in Bezug auf zwei voneinander beabstandeten und an der Wand (2) befestigten Schienen (5, 6) zu bewegen, dass jeder Schlitten (4) sich in der Form eines Korbes (7) darstellt, welcher mit den Schienen (5, 6) mittels Befestigungskörpern (8), welche zumindest an den vier Ecken eines jeden Schlittens (4) fixiert sind, zusammenwirkt, wobei sich die Schienen (5, 6) in der Form eines I darstellen, wobei die genannten Befestigungskörper (8) ein Wälzelement (9) gegen den Steg (10) des I umfassen, wobei jeder Befestigungskörper (8) für dessen Bewegung der Wirkung eines Motorisierungsmittels (11, 12, 13) und der Wirkung eines Arretierungsmittels (14, 15) gegen den ersten Schenkel des I ausgesetzt wird.

2. Begrünungssystem (1) einer Wand oder einer Mauer (2) nach Anspruch 1, **dadurch gekennzeichnet, dass** jedes Motorisierungsmittel (11, 12, 13) und jedes Arretierungsmittel (14, 15) mit einem Segment (17) in Eingriff ist, welches fest mit dem Steg (10) und dem zweiten Schenkel (18) des I verbunden ist.

3. Begrünungssystem (1) einer Wand oder einer Mauer (2) nach Anspruch 1 oder 2, **dadurch gekennzeichnet, dass** sich das Arretierungsmittel (14, 15) in der Form eines Organs (14) darstellt, welches sich unter der Wirkung einer Arretierungsschraube (15) verformt, welche drehbar in Bezug auf das Segment (17) montiert ist.

4. Begrünungssystem (1) einer Wand oder einer Mauer (2) nach Anspruch 3, **dadurch gekennzeichnet, dass** das verformbare Organ (14) einen festen, starren Abschnitt (14a), welcher fest mit dem zweiten Schenkel (18) der Schiene verbunden ist, und einem halbstarren Abschnitt (14b) aufweist, welcher von der Arretierungsschraube (15) mitgenommen wird, um sich auf der einen Seite an einem Befestigungskörper (8) abzustützen, um ihn gegen den ersten Schenkel (16) des I zu drücken, und um ihn auf der anderen Seite von diesem Befestigungskörper (8) zu entfernen, um den genannten Körper freizugeben.

5. Begrünungssystem (1) einer Wand oder einer Mauer (2) nach einem der vorhergehenden Ansprüche, **dadurch gekennzeichnet, dass** das Motorisierungsmittel (11, 12, 13) des Schlittens (7) eine Transportspindel (11), welche mit einem Gewinde (12) des Befestigungskörpers (8) in Eingriff steht (8), und eine Antriebsschraube (13) aufweist, welche die Transportspindel (11) antreibt.

6. Begrünungssystem (1) einer Wand oder einer Mauer (2) nach einem der vorhergehenden Ansprüche, **dadurch gekennzeichnet, dass** die Schienen (5, 6) parallel zueinander angeordnet sind und eine Gleitführung der Befestigungskörper (8) bilden.

7. Begrünungssystem (1) einer Wand oder einer Mauer (2) nach Anspruch 6, **dadurch gekennzeichnet, dass** die Schienen (5, 6) horizontal oder vertikal angeordnet sind.

8. Begrünungssystem (1) einer Wand oder einer Mauer (2) nach irgendeinem der vorhergehenden Ansprüche, **dadurch gekennzeichnet, dass** der Korb (7) sich in der Form eines Gitterkorbes darstellt, dessen Maschen dafür angepasst sind, um die Behälter (3) aufzunehmen.

9. Begrünungssystem (1) einer Wand oder einer Mauer (2) nach Anspruch 8, **dadurch gekennzeichnet, dass** die Behälter (3) jeweils die Aufnahme eines für das Wachstum von Zierpflanzen notwendigen Pflanzsubstrats gewährleisten.

10. Begrünungssystem (1) einer Wand oder einer Mauer (2) nach irgendeinem der vorhergehenden Ansprüche, **dadurch gekennzeichnet, dass** es eine Vielzahl von Schlitten (4) umfasst, welche in horizontaler oder vertikaler Weise gestapelt sind, um eine vollständige Verkleidung der Wand (2) zu bilden.

## Claims

1. System (1) for the vegetation of a panel or wall (2) **characterized by** receptacles (3) integral with a carriage (4) able to move with respect to two rails (5, 6) at a distance from one another and fixed on the wall (2), each carriage (4) being in the form of a container (7) cooperating with the rails (5, 6) by means of fastener bodies (8) fixed at least to four angles of each carriage (4), the rails (5, 6) being I-shaped, said fastener bodies (8) incorporating running gear (9) along the bar (10) of the I, each fastener body (8) being subjected to the action of motor means (11, 12, 13) for its movement and to the action of immobilizing means (14, 15) against the first branch of the I.

2. System (1) for the vegetation of a panel or wall (2) according to Claim 1, wherein each motor means (11, 12, 13) and each immobilizing means (14, 15) are engaged in a runner (17) integral with the bar (10) of the second branch (18) of the I.

3. System (1) for the vegetation of a panel or wall (2) according to Claim 1 or 2, wherein the immobilizing means (1, 15) are in the form of an element (14) that can be deformed under the action of a locking screw (15) mounted able to rotate with respect to the runner (17).

4. System (1) for the vegetation of a panel or wall (2) according to Claim 3, wherein the deformable element (14) comprises a fixed rigid part (14a) integral with the second branch (18) of the rail and a semi-rigid part (14b) driven by the locking screw (15) to firstly bear on a fastener body (8) so as to press it against the first branch (16) of the I and secondly to distance it from said fastener body (8) in order to release said body.

5. System (1) for the vegetation of a panel or wall (2) according to any one of the previous Claims, wherein the motor means (11, 12, 13) of the carriage (4) comprise a translating screw (11) meshing onto a threading (12) on the fastener body (8) and a drive screw (13) driving the translating screw (11).

6. System (1) for the vegetation of a panel or wall (2) according to one of the above Claims, wherein the rails (5, 6) are arranged in parallel to one another forming a slide to guide the fastener bodies (8).

7. System (1) for the vegetation of a panel or wall (2) according to Claim 6, wherein the rails (5, 6) are arranged horizontally or vertically.

8. System (1) for the vegetation of a panel or wall (2) according to any one of the above Claims, wherein the container (7) is in the form of a basket whose interstices are able to receive receptacles (3).

9. System (1) for the vegetation of a panel or wall (2) according to Claim 8, wherein the receptacles (3) each receive the necessary plan substrate required for decorative plants to grow.

10. System (1) for the vegetation of a panel or wall (2) according to any one of the above Claims, wherein it incorporates a plurality of carriages (4) stacked horizontally or vertically to fully cover the wall (2).
